# EUROPÄISCHE PATENTSCHRIFT

(11) **EP 0 624 312 B1**
(45) Veröffentlichungstag und Bekanntmachung des Hinweises auf die Patenterteilung: **07.01.1998**
(21) Anmeldenummer: 94106182.2
(22) Anmeldetag: 21.04.1994
(51) Int. Cl.: A01K 11/00, G09F 3/12

(54) **Identifikationssystem zur Kennzeichnung von Tieren oder Gegenständen**
Identification system for marking animals or objects
Système d'identification pour marquer des animaux ou objets

(30) Priorität: 08.05.1993 DE 4315366
(43) Veröffentlichungstag der Anmeldung: 17.11.1994
(73) Patentinhaber: STOCKO Fasteners GmbH, 42327 Wuppertal (DE)
(72) Erfinder: Engelhardt, Dirk, D-42551 Velbert (DE); Pferdehirt, Thomas, D-42329 Wuppertal (DE); Stodt, Frank, D-42553 Velbert (DE)
(74) Vertreter: Stenger, Watzke & Ring Patentanwälte

(56) Entgegenhaltungen:
- BE-A- 739 451
- CH-A- 228 159
- DE-A- 4 109 787
- US-A- 4 785 563

## Beschreibung

Die vorliegende Erfindung betrifft ein Identifikationssystem zur Kennzeichnung von Tieren oder Gegenständen mit einem Schaft, der mit beiden Enden freiliegend in ein Loch in einem Tier oder einem Gegenstand einsetzbar ist, einem Kennzeichnungselement und einem Sicherungselement, welche jeweils an einem der freien Enden des Schaftes befestigbar sind, wobei das Kennzeichnungselement kesselförmig ausgebildet ist, und in dem in Befestigungslage vom Schaft wegweisenden Kessel ein plattenförmiger Informationsträger einsetzbar und dort befestigbar ist.

Bei bekannten Identifikationssystemen der gattungsgemäßen Art besteht das Kennzeichnungselement im wesentlichen aus einer Scheibe bzw. einem Knopf, in welchen die Informationen eingeprägt oder aufgedruckt sind. Diese Scheibe oder der Knopf sind an einem Schaft befestigt, welcher durch ein Loch in einem Tier oder einem Gegenstand gesteckt wird und an der anderen Seite mittels eines Sicherungselementes, ebenfalls einer Scheibe, einem Splint, einem Knebel oder dergleichen gegen Herausrutschen aus dem Loch gesichert wird. Kennzeichnungs- und Sicherungselement weisen dabei eine Größe auf, die größer ist als das den Schaft aufnehmende Loch, so daß das Identifikationssystem nicht unabsichtlich oder ohne Verletzung bzw. Zerstörung von dem Tier bzw. dem Gegenstand entfernt werden kann.

Aus der CH-A-22 81 59 ist eine aus mindestens sechs Teilen, nämlich zwei Trichtern, einem Informationsträger, einem Steckerstift, einem glockenförmigen Sicherungselement und einer Federscheibe bestehende Ohrenplombe sowie eine dazugehörige Plombierzange bekannt. Der Informationsträger ist in einem der Trichter befestigbar. Der andere Trichter ist mit dem Steckerstift durch Nieten verbindbar. In den mit dem Steckerstift verbundenen Trichter wird dann der mit dem Informationsträger versehene Trichter eingesetzt und dort befestigt. Der Steckerstift weist ein freies Ende mit einer Steckerspitze und einer zylindrischen Eindrehung hinter der Steckerspitze auf. In einem glockenförmigen Sicherungselement ist eine Federscheibe einsetzbar. Diese Federscheibe besteht aus einer gelochten Scheibe mit Federsegmenten. Das freie Steckerstiftende wird mit der Steckerspitze in die Federscheibe eingedrückt, bis dieses in die zylindrische Eindrehung eingreift. Durch diese Maßnahme wird der Informationsträger an einem Ohr befestigt.

Aus der US-A-47 85 563 ist ein Identifikationssystem bekannt, welches einen mit einem Stift verbundenen und mit einem Deckel abdichtbaren Behälter aufweist, in welchem ein plattenförmiger Informationsträger untergebracht werden kann. Der Stift weist eine Reihe hintefeinanderliegender Kegelstumpfsegmente auf, so daß eine auf den Stift aufgeschobene Sicherungsscheibe in Abhängigkeit von der Dicke des Gegenstandes oder des Rohres des zu kennzeichnenden Tieres an verschiedenen Stellen am Stift befestigbar ist. Das freistehende und somit überstehende Stiftende kann dann abgeschnitten werden.

Die DE-A-41 09 787 offenbart ein Identifikationssystem, welches ein knopfartiges Kennzeichnungselement aufweist. Ein tellerförmiges Sicherungselement ist dabei mit einem spindelartig gedrehten Stift versehen, welcher in eine entsprechende Bohrung im knopfartigen Kennzeichnungselement eindrehbar ist.

Die BE-A-739 451 offenbart ein Identifikationssystem, bestehend aus einem Hohlniet, mittels welchem eine Informationsträgerplatte an einem Ohr angenietet werden kann. Die Informationsträgerplatte weist eine Bohrung zum Durchstecken des Befestigungsnietes auf. Der Befestigungsniet und die Informationsträgerplatte sind dabei voneinander unabhängig.

Die bekannten Identifikationssysteme weisen eine Reihe von Nachteilen auf. Zum einen kann das knopfartige Kennzeichnungselement wenn überhaupt nur mit großem maschinellen und wirtschaftlichen Aufwand mit Informationen versehen werden, die automatisch auswertbar sind. Darüber hinaus liegt die auf die Oberfläche aufgebrachte Information frei und ist somit anfällig gegenüber Zerstörung, Verschmutzung und Verwitterung. Somit ist nach einer gewissen Zeit die Lesbarkeit stark eingeschränkt. Zwar ist es bekannt, über derartige Kennzeichnungselemente Schutzkappen aufzusetzen, jedoch ist dann die aufgebrachte Schutzschicht direkt den äußeren Einflüssen ausgesetzt und es ist nur eine Frage der Zeit, bis die Schutzkappe abgefallen oder zerstört ist, so daß die Information wieder freiliegt. Auch ist es bei bekannten Identifikationssystemen problematisch, weitere zusätzliche Elemente anzuordnen. Beispielsweise ist es wünschenswert, bei der Verwendung des Identifikationssystems zur Kennzeichnung von Tieren sogenannte Transponder einzusetzen, das heißt auswertbare Signale abgebende Sender, die per Funk abgefragt werden können. Derartige Transponder müssen irgendwie im Bereich des meist schlanken Schaftes angeordnet werden, welcher aufgrund bestehender Vorschriften eine Mindestlänge zwischen Kennzeichnungs- und Sicherungselement aufweisen muß. Damit kann jedoch kein fester Sitz des Zusatzelementes gewährleistet werden, welches auf dem Schaft längsbeweglich und kippbar ist. Damit ist das Identifikationssystem insgesamt ein Angriffspunkt für mechanische Zerstörung und nicht selten werden derartige Systeme beispielsweise aus dem Ohr eines gekennzeichneten Tieres herausgerissen. Schließlich ist bei bekannten Identifikationssystemen die Befestigung der Kennzeichnungs- und Sicherungselemente am Schaft problematisch. Bei bekannten Systemen wird der Schaft spindelartig gedreht oder mit einem Gewinde versehen, während das Kennzeichnungs- und das Sicherungselement entsprechende Aufnahmebohrungen aufweisen. Zwar ist ein derartiges Identifikationssystem zerstörungsfrei lösbar, jedoch gewährleistet es keinen beliebig festen Halt, beispielsweise bei Verwendung zur Kennzeichnung von wilden Tieren.

Das aus der CH-A-22 81 59 bekannte Identifikationssystem besteht beispielsweise aus einer Vielzahl voneinander unabhängiger Elemente, die sich im laufe der Zeit voneinander lösen können. Damit ist das vorbekannte Identifikationssystem anfällig gegenüber Zerstörung, Verschmutzung und Verwitterung, so daß eine langfristige Sicherung der Informationen nicht gewährleistet werden kann. Darüber hinaus ist neben dem Herstellungsaufwand auch der Montageaufwand verhältnismäßig groß. Das Anordnen von Zusatzelementen an dem bekannten Identifikationssystem ist nicht vorgesehen. Ein sicherer und beliebig fester Halt ist durch das zur Befestigung verwendete Sicherungselement, eine Federscheibe, gänzlich ausgeschlossen. Damit ist das vorbekannte Identifikationssystem nicht zur beliebigen Kennzeichnung von Tieren oder Gegenständen geeignet.

Das aus der US-A-47 85 563 vorbekannte Identifikationssystem weist beispielsweise erhebliche Handhabungsnachteile auf, da der Informationsträger zum Auswerten aus dem kesselförmig ausgebildeten Kennzeichnungselement entfernt werden muß. Hinzu kommt, daß das Identifikationssystem dazu durch Durchtrennen des Schaftes zerstört werden muß. Damit muß nach jedem Auswerten des Informationsträgers ein neues Identifikationssystem montiert und verwendet werden. Der Herstellungs- und der Montageaufwand sind somit vergleichsweise groß. Darüber hinaus kann der lose in dem kesselförmigen Kennzeichnungselement eingesetzte Informationsträger bei Verlust bzw. Beschädigung des Deckels zerstört werden bzw. verlorengehen.

Der Erfindung liegt die **Aufgabe** zugrunde, ein Identifikationssystem der bekannten Art dahingehend weiterzubilden, daß die oben genannten Nachteile beseitigt werden, insbesondere das Kennzeichnungselement dauerhaft mit auch automatisch auswertbaren Informationen versehen werden kann, wobei das Identifikationssystem mit geringem wirtschaftlichen Aufwand hergestellt und montiert und mit zusätzlichen Elementen versehen werden kann.

Zur **Lösung** dieser Aufgabe wird vorgeschlagen, daß das Kennzeichnungselement und der Schaft einstückig als Niete ausgebildet sind und das Sicherungselement einen Sicherungstopf aufweist.

Aufgrund der erfindungsgemäßen Ausgestaltung des Kennzeichnungselementes ist es möglich, einen beliebigen plattenförmigen Informationsträger zu verwenden. Dieser kann völlig unabhängig vom Kennzeichnungselement mit Informationen versehen werden. Dabei ist es mit vernünftigem wirtschaftlichen Aufwand möglich, die Informationen derart anzuordnen, daß sie automatisch auswertbar sind. Darüber hinaus ist die Kennzeichnung gegenüber bekannten Systemen erheblich flexibler, so daß nahezu beliebige Anwendervorstellungen berücksichtigt werden können. Dadurch, daß der Informationsträger als plattenförmiges Element ausgebildet ist und in dem vom Schaft wegweisenden Kessel des Kennzeichnungselementes einsetzbar und dort befestigbar ist, stellt die mit Informationen versehene Fläche nicht die am weitesten außenliegende Oberfläche dar, so daß mechanische Einflüsse sich nicht auswirken können. Dadurch, daß das Kennzeichnungselement und der Schaft einstückig als Nietteil ausgebildet sind, ist es nunmehr möglich, das dem Kennzeichnungselement gegenüberliegende freie Schaftende entweder direkt als Sicherungselement zu verwenden oder nur noch an dieser Stelle eine Befestigung vorzusehen. Durch die Verwendung des topfförmigen Sicherungselementes, welches mit einer am Topfboden liegenden Öffnung wie eine Unterlegscheibe auf das freie Schaftende aufgesetzt und dort befestigt wird, beispielsweise durch Aufweiten des freien Schaftendes, wird eine über eine bestimmte axiale Strecke vergrößerte Zylinderform bereitgestellt, auf welcher Zusatzelemente und dergleichen kippfrei und wegen der großen Oberfläche unverrutschbar befestigt werden können.

Durch diese Ausgestaltung kann das Identifikationssystem mit geringem wirtschaftlichen Aufwand hergestellt und montiert werden. Darüber hinaus ist durch das topfförmige Sicherungselement und die Nietverbindung ein sicherer und beliebig fester Halt gegeben. Ferner können Zusatzelemente kippfrei und aufgrund einer größeren Oberfläche unverrutschbar befestigt werden. Durch die topfförmige Ausgestaltung des Sicherungselementes ist es ferner möglich, das Sicherungselement innen und/oder außen ebenfalls mit Informationsträgern oder weiteren Funktionselementen zu versehen.

Mit besonderem Vorteil wird angegeben, daß als Sicherungselement eine an sich bekannte Druckknopfkugel verwendet wird. Bei Ausbildung des Kennzeichnungselementes als Nietteil kann dieses am freien Ende durch einfache Aufweitung selbst als Sicherungselement verwendet werden. Dabei wird mit Vorteil angegeben, daß vor der Aufweitung des freien Endes des Kennzeichnungselementes eine Unterlegscheibe aufgesetzt wird.

Mit Vorteil wird weiterhin angegeben, daß der Informationsträger ein in Schichten aufgebautes Scheibenelement ist. Derartige Schichten können beispielsweise durch Laminieren gebildet werden. Mit Vorteil wird angegeben, daß zunächst auf einer Trägerscheibe eine bedruckbare Schicht aufgebracht wird, über welche nach dem Aufbringen der Informationen eine durchsichtige Schutzschicht aufgebracht wird. Vorteilhaft wird die Information spiegelverkehrt auf die Schutzfolie aufgebracht. Auf der Druckseite wird dann eine Beschriftung mit transparentem Kleber aufgebracht oder wahlweise auf der Trägerscheibe. Nach Laminieren mit der Trägerscheibe liegt die Druckschicht bzw. Information zwischen Trägerplatte und Folie geschützt. Dieses Verfahren hat den Vorteil, daß keine Veränderung, zum Beispiel Bakterienbefall, Farbumschläge, milchige Schicht, die Lesbarkeit beeinträchtigt. Damit wird gewährleistet, daß der Informationsträger über einen sehr langen Zeitraum auswertbar bleibt. Weiterhin wird mit Vorteil angegeben, daß die freie Oberkante des am Kennzeichnungselement gebildeten Kessels nach Einlegen des Informationsträgers umgebördelt wird. Damit wird zum einen ein sicherer Halt des Informationsträgers im Kennzeichnungselement gewährleistet, zum anderen auch sichergestellt, daß die äußerste freie Kante die Bördelkante des Kennzeichnungselementes ist, so daß die Schutzschicht des Informationsträgers keiner mechanischen Einwirkung ausgesetzt ist.

Mit Vorteil wird weiterhin angegeben, daß an dem topfförmigen Sicherungselement an der Topfoberseite eine weitere kesselförmig ausgebildete Aufweitung mit gegenüber dem Topf größerem Durchmesser ausgebildet ist. Dieses zusätzliche kesselförmige Element kann darüber hinaus für weitere Informationsträger verwendet werden. Auf diese Weise ist es möglich, daß auf beiden Seiten des Schaftes Informationsträger angeordnet sind. Für die Verwendung eines geschlossenen topfförmigen Elementes als Sicherungselement oder des mit weiteren Informationsträgern versehenen topfförmigen Sicherungselementes wird eine Rapidkappe vorgeschlagen, welche im Topfinneren angeordnet und zur Befestigung am freien Ende des Schaftes geeignet ist.

Mit dem erfindungsgemäßen Identifikationssystem ist es zum einen möglich, auch automatisch auswertbare Informationen ohne großen wirtschaftlichen Aufwand an dem Kennzeichnungselement anzubringen. Darüber hinaus wird die Befestigung des Identifikationssystems vereinfacht und gleichzeitig verbessert. Bei dem erfindungsgemäßen Identifikationssystem sind die angeordneten Informationen dauerhafter geschützt als bei bekannten Systemen. Die Anordnung weiterer Elemente ist denkbar einfach ebenso wie die Befestigung.

Weitere Vorteile und Merkmale der Erfindung ergeben sich aus der folgenden Beschreibung anhand der Figuren. Dabei zeigen:
- Fig. 1: eine teilgeschnittene Darstellung eines erfindungsgemäßen Kennzeichnungselementes;
- Fig. 2a: eine schematische Darstellung eines Informationsträgers gemäß einer ersten Alternative;
- Fig. 2b: eine schematische Darstellung eines Informationsträgers gemäß einer zweiten Alternative;
- Fig. 3a: eine teilgeschnittene Darstellung eines Kennzeichnungselementes mit Informationsträger gemäß Fig. 2a;
- Fig. 3b: eine teilgeschnittene Darstellung eines Kennzeichnungselementes mit Informationsträger gemäß Fig. 2b;
- Fig. 4: eine Draufsicht auf ein Kennzeichnungselement mit einer Beispielsinformation;
- Fig. 5: eine teilgeschnittene Darstellung eines an einem Tier oder einem Gegenstand befestigten Identifikationssystems;
- Fig. 6: eine teilgeschnittene Darstellung eines topfförmigen Sicherungselementes;
- Fig. 7: eine teilgeschnittene Darstellung eines Zusatzelementes;
- Fig. 8: eine teilgeschnittene Darstellung der Montageeinheit gemäß Fig. 6 und 7;
- Fig. 9: eine teilgeschnittene Darstellung eines an einem Tier oder einem Gegenstand befestigten Identifikationssystems gemäß einer weiteren Ausführungsform;
- Fig. 10: eine teilgeschnittene Darstellung eines erfindungsgemäßen Kennzeichnungselementes gemäß einer weiteren Ausführungsform;
- Fig. 11: eine teilgeschnittene Darstellung einer Druckknopfkugel;
- Fig. 12: eine teilgeschnittene Darstellung eines an einem Tier oder einem Gegenstand befestigten Identifikationssystems gemäß einer weiteren Ausführungsform;
- Fig. 13: eine teilgeschnittene Darstellung einer weiteren Ausführungsform eines Sicherungselementes;
- Fig. 14: eine Schnittdarstellung durch eine Rapidkappe;
- Fig. 15: eine teilgeschnittene Darstellung einer Montageeinheit gemäß Fig. 13 und 14 und
- Fig. 16: eine teilgeschnittene Darstellung eines an einem Tier oder einem Gegenstand befestigten Identifikationssystems gemäß einer weiteren Ausführungsform.

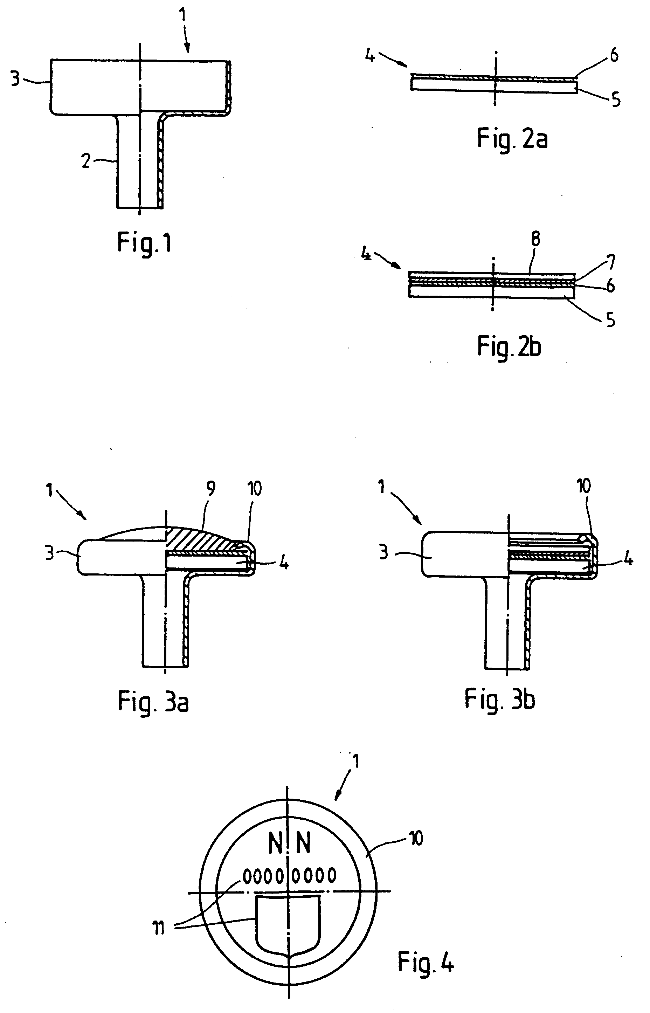

Fig. 1 zeigt in teilgeschnittener Darstellung ein erfindungsgemäßes Kennzeichnungselement 1. Dieses ist einstückig mit einem Schaft 2 geformt und ist kesselförmig ausgebildet, so daß sich die Einheit aus Schaft 2 und Kessel 3 ergibt. In der gezeigten Ausführungsform handelt es sich bei dem Kennzeichnungselement 1 um ein hohles Nietelement. Alternativ kann selbstverständlich der Schaft 2, auch als Hohlschaft, in einen mit einer Öffnung versehenen Kessel 3 eingesetzt sein.

Fig. 2a zeigt einen plattenförmigen Informationsträger 4 in einer Grundform. Diese umfaßt eine Trägerscheibe 5, auf welcher eine mit Informationen versehbare Farbschicht 6 angeordnet ist. Diese Farbschicht kann zum Bedrucken, zum Prägen oder dgl. vorgesehen sein. In der in Fig. 2b gezeigten alternativen oder weitergebildeten Form des Informationsträgers 4 ist oberhalb der Farbschicht 6 eine Kleberschicht 7 angeordnet, welche zur sicheren Befestigung der Schutzschicht 8 vorgesehen ist. Die Kleberschicht 7 und die Schutzschicht 8 sind durchsichtig, so daß die auf der Farbschicht 6 bzw. Schutzschicht 8 angeordneten Informationen von außen sichtbar sind. Es ist selbstverständlich, daß ein beliebiger Schichtaufbau möglich ist. So kann die Schutzschicht 8 ihrerseits selbstklebend die Kleberschicht 7 tragen. Weiterhin können die Schichten aus für beliebige Auswertungsverfahren geeigneten Materialien bestehen.

Fig. 3a zeigt ein montiertes Kennzeichnungselement 1 gemäß einer Ausführungsform. In den Kessel 3 ist der Informationsträger 4 gemäß Fig. 2a eingesetzt. Darüber wurde eine domförmige Kunststoffschicht 9, beispielsweise durch Gießen angeordnet. Am Rand wurde die freie Kante des Kessels nach innen umgebördelt, wodurch sich die Bördelkante 10 ergibt, welche den Informationsträger 4 sicher im Kessel 3 hält. Auf den domförmigen Kunststoffguß oder eine sonstige Schutzform kann verzichtet werden, wenn der Informationsträger in der Ausbaustufe gemäß Fig. 2b in den Kessel 3 eingesetzt wird. Nach Einsetzen des Informationsträgers 4 kann dann direkt die Bördelkante 10 durch Umbördeln der freien Kante des Kessels 3 gebildet werden, wodurch der Informationsträger 4 im Kessel 3 befestigt wird. Der sich ergebende Spalt zwischen Kessel und Informationsträger kann mit geeigneten Mitteln gegen Eindringen von Schmutz, Wasser und dgl. geschützt werden, beispielsweise mit Kunststoff vergossen werden. In der Draufsicht ergibt sich das Erscheinungsbild gemäß Fig. 4. Das Kennzeichnungselement 1 zeigt von oben gesehen die Bördelkante 10 an der Oberkante des Kessels 3 und die durch die Schutzschicht sicht- und auswertbaren Informationen 11, welche in Fig. 4 selbstverständlich nur beispielhaft angedeutet werden. So können beispielsweise auch Barcodes und andere automatisch auswertbare Informationen verwendet werden.

Es zeigt sich, daß in der Ausführungsform gemäß Fig. 3b die äußerste Kante die Bördelkante 10 des Kennzeichnungselementes 1 ist. Dieses beispielsweise aus Metall oder Kunststoff gebildete Element schützt somit mit der außenliegenden Bördelkante 10 die Schutzschicht 8 oder teilweise auch Kunststoffschicht 9 gegen mechanische Beschädigung. Im Falle der Kunststoffschicht 9 ist diese an ihrer dünnsten und damit schwächsten Stelle durch die Bördelkante 10 geschützt.

Dieses so gebildete Kennzeichnungselement 1 läßt sich dann mit dem Schaft 2 durch ein Loch in einem Tier oder einem Gegenstand 12 einsetzen. Selbstverständlich kann das freie Schaftende auch selbstschneidend ausgebildet sein.

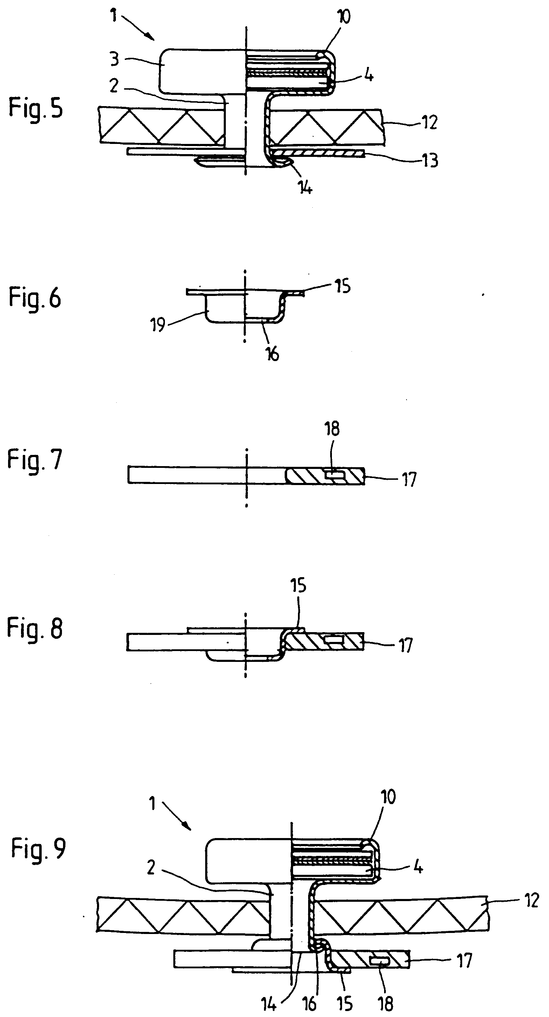

Nachdem das Tier oder der Gegenstand von dem Schaft 2 durchdrungen ist, wird, wie in Fig. 5 gezeigt, das freie Schaftende aufgeweitet, so daß sich die Aufweitung 14 als Sicherungselement ergibt. Diese Sicherung kann noch dadurch unterstützt werden, daß vor dem Aufweiten des freien Schaftendes eine Unterlegscheibe 13 auf den Schaft aufgesetzt wird. Wie in Fig. 5 gezeigt, wird mit dem erfindungsgemäßen Identifikationssystem sichergestellt, daß ohne großen wirtschaftlichen Aufwand nahezu beliebige Informationen sicher, dauerhaft und zerstörungsfrei am Kennzeichnungselement angeordnet werden können, welches seinerseits sicher und dauerhaft und mit einfachen Mitteln am Tier bzw. Gegenstand 12 befestigt werden kann.

Ein weiteres Sicherungselement ist in Fig. 6 gezeigt. Dabei handelt es sich um ein topfförmig ausgebildetes Sicherungselement, einen sogenannten Sicherungstopf 15. Dieser weist eine bodenseitige Öffnung 16 auf sowie eine zylindrische Umfangsfläche 19 über eine definierte axiale Länge. Das freie Ende des Sicherungstopfes 15 ist wieder scheibenartig radial nach außen umgeformt. Ein derartiger Sicherungstopf kann an dem freien Schaftende durch Aufweitung desselben angeordnet werden, indem das freie Schaftende von außen durch die Öffnung 16 im Boden des Sicherungstopfes 15 hindurchgeführt und in dem Topf aufgeweitet wird. Dabei kann diese Anordnung mit oder ohne Unterlegscheibe 13 verwendet werden. Der Sicherungstopf 15 kommt zum Einsatz, wenn, wie häufig erforderlich, Zusatzelemente 17, wie in Fig. 7 gezeigt, verwendet werden sollen. Beispielsweise ist es wünschenswert, bei der Kennzeichnung von Tieren oder Gegenständen, die hinsichtlich ihrer Bewegung überprüft werden sollen, einen Transponder 18 zu verwenden. Dabei handelt es sich um einen auf ein Signal hin eine auswertbare Information abgebenden Sender. So kann beispielsweise der jeweilige Aufenthaltsort eines Tieres ermittelt werden. Im in Fig. 7 gezeigten Ausführungsbeispiel ist der Transponder 18 in ein scheibenförmiges Zusatzelement 17 eingebracht, welches auch ein Funktionselement sein kann, beispielsweise als Antenne dient. Es ist auch denkbar, das Zusatzelement mit anderen Funktionselementen zu versehen.

Fig. 8 zeigt die Montageeinheit aus Sicherungstopf 15 und Zusatzelement 17. Durch die Ausbildung des Zylinderteils 19 am Sicherungstopf 15 ergibt sich eine zylindrische Fläche, welche der kipp- und bewegungsfesten Anordnung eines Zusatzelementes 17 dient. Zusätzlich kann die nach außen geformte Umfangskante des Sicherungstopfes 15 als Anschlag und Befestigungsfläche für das Zusatzelement 17 dienen.

Diese in Fig. 8 gezeigte Montageeinheit kann dann in der in Fig. 9 gezeigten Weise mit dem Kennzeichnungselement 1 zu einem Identifikationssystem an einem Tier bzw. einem Gegenstand 12 befestigt werden. Dazu wird der mit dem Zusatzelement 17 versehene Sicherungstopf mit seiner Unterseite zum zu kennzeichnenden Tier bzw. Gegenstand hin angeordnet. Der Schaft 2 des Kennzeichnungselementes 1, welches in der oben beschriebenen Weise mit dem Informationsträger 4 versehen ist, durchdringt das Tier bzw. den Gegenstand 12 und die Öffnung 16 im Boden des Sicherungstopfes 15. Dann wird das freie Ende des Schaftes 2 in dem Sicherungstopf 15 aufgeweitet, so daß die Aufweitung 14 der sicheren Verbindung zwischen dem Schaft 2 und dem Sicherungstopf 15 dient. Das so angeordnete Identifikationssystem ist somit sicher an dem Tier bzw. Gegenstand 12 befestigt und darüber hinaus mit dem Zusatzelement 17 versehen. Aufgrund des vergrößerten Durchmessers des Zylinders 19 am Sicherungstopf 15 und der großen Befestigungsfläche am Zylinderumfang und an der äußeren Befestigungskante sitzt das Zusatzelement bewegungs- und kippsicher am Identifikationssystem.

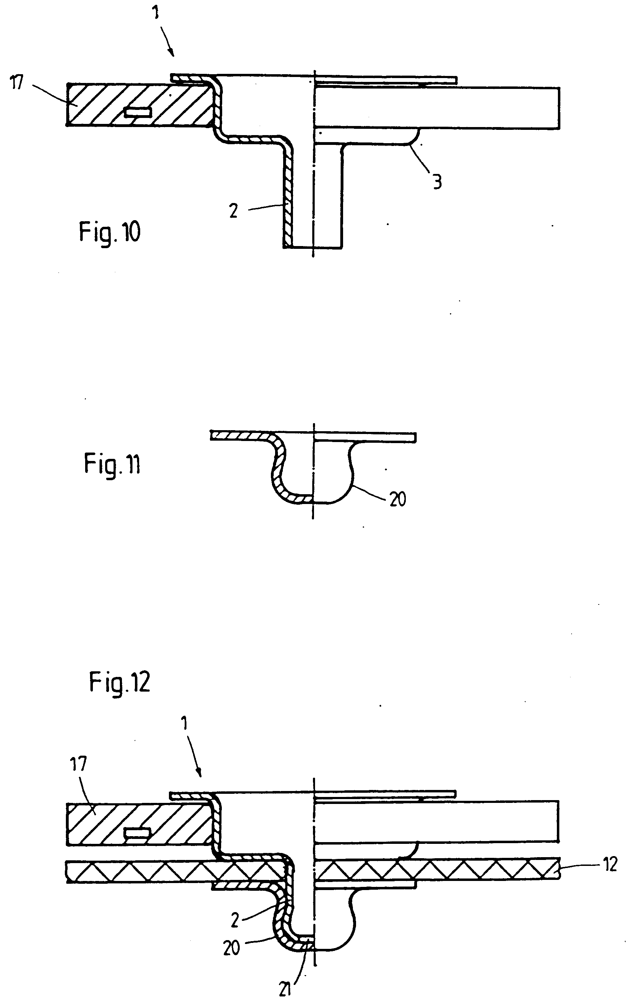

Eine alternative oder weitergebildete Ausführungsform eines erfindungsgemäßen Kennzeichnungselementes ist in Fig. 10 gezeigt. Anstelle der zur Befestigung des Informationsträgers nach innen umzubördelnden freien Kante am Kessel 3 weist das Kennzeichnungselement 1 gemäß Fig. 10 einen nach außen umgeformte freie Kante auf. Damit kann der zylindrische äußere Umfang des Kessels 3 zur Aufnahme eines Zusatzelementes 17 in der hinsichtlich des Sicherungstopfes 15 beschriebenen Weise dienen. Selbstverständlich kann ein Informationsträger dennoch in das Kennzeichnungselement eingesetzt werden, beispielsweise in der Fig. 3a gezeigten Weise oder auch durch Verwendung von Sicherungsringen und dgl.

Ein alternatives Sicherungselement ist in Fig. 11 in Form einer Druckknopfkugel 20 gezeigt. Wie in Fig. 12 zu sehen, kann die Druckknopfkugel 20 direkt auf das freie Ende des Schaftes 2 in an sich bekannter Weise aufgebracht werden. Das freie Schaftende 21 formt sich dann in der aus der Druckknopftechnologie bekannten Weise in der Druckknopfkugel ein. Das zu kennzeichnende Tier bzw. der zu kennzeichnende Gegenstand wird dann zwischen dem Kesselboden des Kennzeichnungselementes 1 und dem Druckknopfkugelflansch aufgenommen. Das Identifikationssystem ist somit sicher am zu kennzeichnenden Tier bzw. Gegenstand befestigt. Selbstverständlich kann anstelle des in Fig. 12 gezeigten Ausführungsbeispieles auch ein Kennzeichnungselement wie in Fig. 3a oder 3b gezeigt verwendet werden.

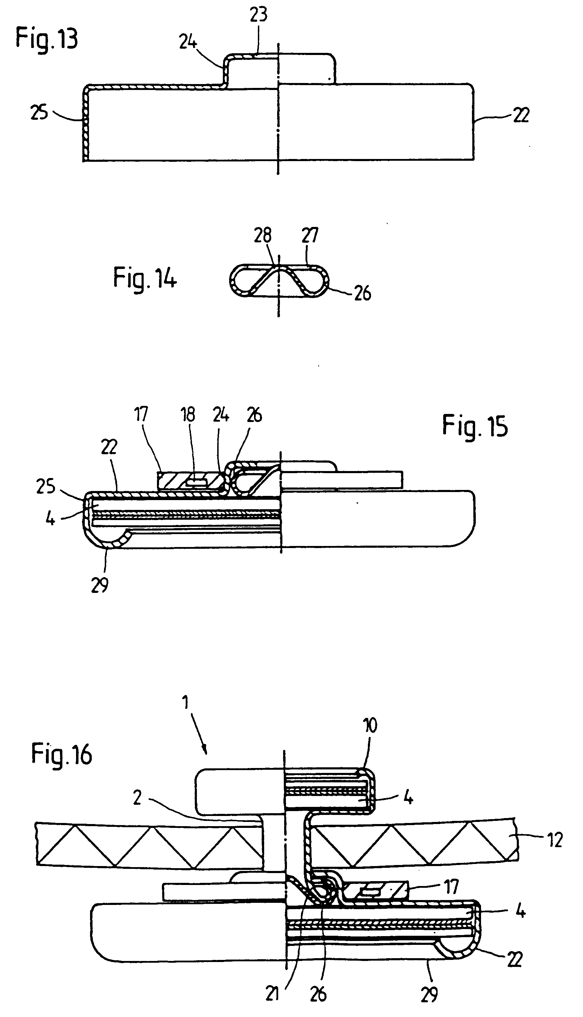

Fig. 13 zeigt eine weitere Ausführungsform eines Sicherungstopfes 22, welcher zusätzlich in der oben zum Sicherungstopf 15 beschriebenen Ausführungsform einen an die Sicherungstopfoberseite angeformten Kessel 25 aufweist. In bekannter Weise ist an dem Topfboden eine Öffnung 23 ausgebildet, ebenso wie der zylindrische Teil 24. Anstelle des nach außen umgeformten oberen Randes ist dort ein Kessel 25 ausgebildet, welcher beispielsweise der Aufnahme eines Zusatzelementes oder eines Informationsträgers dienen kann. Da bei Verwendung eines geschlossenen Sicherungstopfes gemäß Fig. 15 oder eines mit einem Zusatzelement 17 oder einem Informationsträger 4 versehenen Sicherungstopfes 22 gemäß Fig. 13 der Topfinnenraum nicht mehr zugänglich ist, wird die in Fig. 14 gezeigte Rapidkappe vorgeschlagen.

Eine wie in Fig. 14 gezeigte Rapidkappe 26 ist ein Bauteil, welches bei Verwendung nicht selbstlochender Druckknopf- oder Nietsysteme eingesetzt werden kann. Sie ermöglicht, wie im vorliegenden Fall, daß beim Durchsetzen des Schaftes 2 durch einen zu kennzeichnenden Gegenstand oder ein Tier ein Gegenlager gebildet wird. Nach dem Durchsetzen stellt die Rapidkappe 26 mit ihrem Führungskegel 28, der dem Schaft 2 durch die Öffnung 27 an der Rapidkappe 26 zugänglich ist, ein Aufweitungsgegenlager dar. Das freie Schaftende wird zwangsläufig zur Aufweitung in das Kappeninnere geführt. Ein Anwendungsbeispiel einer derartigen sogenannten Rapidkappe ist in Fig. 15 gezeigt. Ein Sicherungstopf 22 gemäß Fig. 13 ist in seinem Topfteil mit einer Rapidkappe 26 versehen. Über den zylindrischen Bereich 24 ist ein Zusatzelement 17 mit einem Transponder 28 angeordnet. In den Kessel 25 ist ein Informationsträger 4 eingesetzt, im gezeigten Ausführungsbeispiel ein Informationsträger 4 gemäß Fig. 2b. Die freie Kante des Kessels 25 ist dann wie beim Kennzeichnungselement 1 nach innen umgebördelt, so daß sie die den Informationsträger sichernde Bördelkante 29 ergibt. Die Öffnung 23 im Boden des Sicherungstopfes 22 ist in Deckung mit der Öffnung 27 in der Rapidkappe 26.

Fig. 16 zeigt die beispielhafte Anordnung eines erfindungsgemäßen Identifikationssystems unter Verwendung eines erfindungsgemäßen Kennzeichnungselementes 1 und eines Sicherungstopfes 22 in der in Fig. 15 gezeigten Montageeinheit. Der Schaft 2 des Sicherungselementes 1, welches in oben beschriebener Weise aufgebaut ist, durchdringt ein Loch in dem Tier bzw. dem Gegenstand 12. Dieses Loch kann aufgrund der Verwendung der Rapidkappe auch bei der Montage des Identifikationssystems selbständig hergestellt werden. Das freie Ende 21 des Schaftes durchdringt die Öffnung 23 am Boden des Sicherungstopfes 22 und gleichzeitig die Öffnung 27 in der Rapidkappe 26 und stößt auf einen Umfangsbereich am Führungskegel 28 der Rapidkappe 26. Bei Aufrechterhaltung oder Erhöhung des Druckes wird das freie Schaftende 21 zwangsläufig in das Innere der Rapidkappe 26 hinein aufgeweitet. Diese Aufweitung kann so weit gehen, daß sich das freie Schaftende 21 einmal umgebördelt wieder an den Schaft 2 anlegt. Mit diesem gezeigten Identifikationssystem ist es möglich, zusätzlich zum reinen Kennzeichnungselement, welches in besonders einfacher und sicherer Weise am zu kennzeichnenden Tier bzw. Gegenstand 12 befestigt werden kann, Zusatzelemente 17 oder weitere Informationsträger 4 anzuordnen.

Es ist offensichtlich, daß das erfindungsgemäße Identifikationssystem hinsichtlich seiner Montageform und seiner Anwendungsmöglichkeiten nicht beschränkt ist. Neben der Kennzeichnung von Tieren jeglicher Art lassen sich beispielsweise Textilien kennzeichnen, unter anderem zur Diebstahlsicherung, zur Wegeverfolgung oder einfach zur Darstellung auswertbarer Informationen beispielsweise für Wasch- und Reinigungsvorgänge.

### Bezugszeichenliste

- 1: Kennzeichnungselement
- 2: Schaft
- 3: Kessel
- 4: Informationsträger
- 5: Trägerscheibe
- 6: Farbschicht
- 7: Kleberschicht
- 8: Schutzschicht
- 9: Kunststoffschicht
- 10: Bördelkante
- 11: Information
- 12: Tier/Gegenstand
- 13: Unterlegscheibe
- 14: Aufweitung
- 15: Sicherungstopf
- 16: Öffnung
- 17: Zusatzelement
- 18: Transponder
- 19: Zylinder
- 20: Druckknopfkugel
- 21: freies Schaftende
- 22: Sicherungstopf
- 23: Öffnung
- 24: Zylinder
- 25: Kessel
- 26: Rapidkappe
- 27: Öffnung
- 28: Führungskegel
- 29: Bördelkante

## Patentansprüche

1. Identifikationssystem zur Kennzeichnung von Tieren oder Gegenständen mit einem Schaft (2), der mit beiden Enden freiliegend in ein Loch in einem Tier oder einem Gegenstand (12) einsetzbar ist, einem Kennzeichnungselement (1) und einem Sicherungselement, welche jeweils an einem der freien Enden des Schaftes (2) befestigbar sind, wobei das Kennzeichnungselement (1) kesselförmig ausgebildet ist, und in dem in Befestigungslage vom Schaft (2) wegweisenden Kessel (3) ein plattenförmiger Informationsträger (4) einsetzbar und dort befestigbar ist,
**dadurch gekennzeichnet**,
daß das Kennzeichnungselement (1) und der Schaft (2) einstückig als Nietteil ausgebildet sind und das Sicherungselement einen Sicherungstopf (15, 22) aufweist.

2. Identifikationssystem nach Anspruch 1, dadurch gekennzeichnet, daß der Informationsträger (4) ein aus mehreren Schichten (5, 6, 7) aufgebautes scheibenförmiges Element ist.

3. Identifikationssystem nach Anspruch 2, dadurch gekennzeichnet, daß auf dem Informationsträger (4) eine Schutzschicht (8) angeordnet ist.

4. Identifikationssystem nach einem der vorhergehenden Ansprüche, dadurch gekennzeichnet daß das Kennzeichnungselement (1) an seinem freien Ende des Kessels (3) eine nach innen umgelegte Bördelkante (10) aufweist.

5. Identifikationssystem nach einem der vorhergehenden Ansprüche, dadurch gekennzeichnet, daß das Sicherungselement durch eine Aufweitung (14) des freien Endes des Schaftes (2) gebildet ist.

6. Identifikationssystem nach Anspruch 5, dadurch gekennzeichnet, daß auf dem Schaft (2) eine Unterlegscheibe (13) angeordnet ist.

7. Identifikationssystem nach einem der vorhergehenden Ansprüche, dadurch gekennzeichnet, daß das Sicherungselement eine Druckknopfkugel ist.

8. Identifikationssystem nach einem der vorhergehenden Ansprüche, dadurch gekennzeichnet, daß das Sicherungselement eine Rapidkappe (26) aufweist.

9. Identifikationssystem nach einem der vorhergehenden Ansprüche, dadurch gekennzeichnet, daß im Bereich des Sicherungselementes ein Zusatzelement (17) angeordnet ist.

10. Identifikationssystem nach einem der vorhergehenden Ansprüche, dadurch gekennzeichnet, daß an dem Sicherungselement ein zusätzlicher Informationsträger (4) angeordnet ist.

## Claims

1. Identification system for marking animals or objects, having a shank (2) which can be inserted, with its two ends exposed, into a hole in an animal or an object (12), and having a marking element (1) and a securing element, which elements can each be fastened at one of the free ends of the shank (2), the marking element (1) being designed in the form of a trough, and it being possible for a plate-like information carrier (4) to be inserted in the trough (3), which, in the fastened position, is directed away from the shank (2), and to be fastened there, characterized in that the marking element (1) and the shank (2) are designed integrally as a riveting element, and the securing element has a securing cup (15, 22).

2. Identification system according to Claim 1, characterized in that the information carrier (4) comprises a disc-like element which is made up of a number of layers (5, 6, 7).

3. Identification system according to Claim 2, characterized in that a protective layer (8) is arranged on the information carrier (4).

4. Identification system according to one of the preceding claims, characterized in that, at its free end of the trough (3), the marking element (1) has a flange edge (10) which is folded over inwards.

5. Identification system according to one of the preceding claims, characterized in that the securing element is formed by a widened section (14) of the free end of the shank (2).

6. Identification system according to Claim 5, characterized in that a washer (13) is arranged on the shank (2).

7. Identification system according to one of the preceding claims, characterized in that the securing element is a spherical pushbutton.

8. Identification system according to one of the preceding claims, characterized in that the securing element has a rapid-action cap (26).

9. Identification system according to one of the preceding claims, characterized in that an additional element (17) is arranged in the region of the securing element.

10. Identification system according to one of the preceding claims, characterized in that an additional information carrier (4) is arranged on the securing element.

## Revendications

1. Système d'identification pour appliquer une marque distinctive à des animaux ou à des objets, comprenant une tige (2) qui, tout en laissant ses deux extrémités libres, peut être insérée dans un trou pratiqué dans un animal ou dans un objet (12), un élément distinctif (1) et un élément d'arrêt qui peuvent être fixés chacun à l'une des extrémités libres de la tige (2), l'élément distinctif (1) étant conçu en forme de cuvette, un support d'informations (4) en forme de plaque pouvant, en position de fixation, être logé dans la cuvette (3) orientée à l'opposé de la tige (2) et pouvant y être fixé, caractérisé en ce que l'élément distinctif (1) et la tige (2) sont conçus d'un seul tenant sous la forme d'une partie de rivet, et l'élément d'arrêt comporte une calotte d'arrêt (15, 22).

2. Système d'identification selon la revendication 1, caractérisé en ce que le support d'informations (4) est un élément en forme de disque constitué de plusieurs couches (5, 6, 7).

3. Système d'identification selon la revendication 2, caractérisé en ce qu'une couche protectrice (8) est disposée sur le support d'informations (4).

4. Système d'identification selon une des revendications précédentes, caractérisé en ce que l'élément distinctif (1) comporte, à l'extrémité libre de la cuvette (3), un bord rabattu (10) replié vers l'intérieur.

5. Système d'identification selon une des revendications précédentes, caractérisé en ce que l'élément d'arrêt est formé par un élargissement de l'extrémité libre de la tige (2).

6. Système d'identification selon la revendication 5, caractérisé en ce qu'une rondelle (13) est disposée sur la tige (2).

7. Système d'identification selon une des revendications précédentes, caractérisé en ce que l'élément d'arrêt est une protubérance de bouton-pression.

8. Système d'identification selon une des revendications précédentes, caractérisé en ce que l'élément d'arrêt est une coiffe rapide (26).

9. Système d'identification selon une des revendications précédentes, caractérisé en ce qu'un élément supplémentaire (17) est disposé dans la zone de l'élément d'arrêt.

10. Système d'identification selon une des revendications précédentes, caractérisé en ce qu'un support d'informations supplémentaire (4) est disposé sur l'élément d'arrêt.
